# EUROPEAN PATENT SPECIFICATION

(11) **EP 1 496 425 B1**
(45) Date of publication and mention of the grant of the patent: **01.03.2006**
(21) Application number: 04016222.4
(22) Date of filing: 09.07.2004
(51) Int. Cl.: G06F 3/033

(54) **Touch panel display apparatus**
Touchscreen
Ecran tactile

(30) Priority: 10.07.2003 JP 2003195280
(43) Date of publication of application: 12.01.2005
(73) Proprietor: NTT DoCoMo, Inc., Tokyo 100-6150 (JP)
(72) Inventor: Hayashi, Kouki, c/o NTT DoCoMo, Inc., Chiyoda-ku Tokyo 100-6150 (JP); Hiraiwa, Akira, deceased (JP); Manabe, Hiroyuki, c/o NTT DoCoMo, Inc., Tokyo 100-6150 (JP); Sugimura, Toshiaki, c/o NTT DoCoMo, Inc., Tokyo 100-6150 (JP)
(74) Representative: Grosse, Wolfgang

(56) References cited:
- PATENT ABSTRACTS OF JAPAN vol. 2000, no. 13, 5 February 2001 (2001-02-05) & JP 2000 284909 A (SHIN ETSU POLYMER CO LTD), 13 October 2000 (2000-10-13)

## Description

### BACKGROUND OF THE INVENTION

### Field of the Invention

The present invention relates to a display apparatus.

### Related Background Art

As a conventional touch panel type display apparatus, there is a known apparatus of structure in which when a data input part is depressed by a finger, the finger is electrified so that a user can feel a pseudo click (e.g., cf. Patent Document 1).

Patent Document 1: Japanese Patent Application Laid-Open No. 2000-284909

### SUMMARY OF THE INVENTION

However, the apparatus described in Patent Document 1 was able to notify the user of the presence/absence of input by electricity but failed to give the user, for example, such an inputting feeling as the user feels depressing an operational part, which posed a problem of lack of reality of the operating feeling.

An object of the present invention is therefore to provide a display apparatus permitting the user to feel operating with reality, while solving the above problem.

In order to achieve the above object, a display apparatus of the present invention is a display apparatus comprising: a display; a transparent electrode layer overlaid on a screen of the display and having a plurality of transparent electrodes arranged in a two-dimensional array on the opposite side to a surface facing the screen; an insensitive electrode (earth electrode) electrically isolated from the transparent electrodes and maintained at a constant potential; and voltage applying means for varying a potential of the transparent electrodes to establish a potential difference between each transparent electrode and the insensitive electrode; wherein in response to a touch on the transparent electrode layer, the voltage applying means varies the potential of a transparent electrode in a region of the transparent electrode layer given the touch, with time.

In the above display apparatus, when a finger of the user touches the transparent electrode layer to manipulate the display apparatus, the potential difference between the transparent electrode and the insensitive electrode is varied. If the insensitive electrode is mounted, for example, near the base of the user's finger, an electric current according to the potential variation flows through the user's finger because of the potential difference. Therefore, for example, the display apparatus is able to continuously give the user a feeling of the finger's hitting the display and a feeling of the finger's depressing the display, whereby the user can have the operating feeling with reality.

The display apparatus of the present invention is also preferably configured so that when the transparent electrode layer is given the touch, the voltage applying means varies with time the potential of a transparent electrode in a region of the transparent electrode layer given the touch so as to cause a first state in which the potential of the transparent electrode is higher than that of the insensitive electrode, in the predetermined time immediately after the touch and to cause a second state in which the potential of the insensitive electrode is higher than that of the transparent electrode, during a continuing period of the touch thereafter.

In the display apparatus of the preferred configuration as described above, when the user's finger touches the transparent electrode layer to manipulate the display apparatus, the potential difference between the transparent electrode and the insensitive electrode is varied. When the insensitive electrode is mounted, for example, near the base of the user's finger, an electric current according to the potential variation flows through the user's finger because of the above potential difference. Since the potential difference causes the first state in which the potential of the transparent electrode is higher than that of the insensitive electrode, in the predetermined time immediately after the touch, the electric current through the finger flows in the direction from the outside toward the fingertip and similarly varies so as to follow the variation of the potential difference. When the electric current of this type is made to flow through the user's finger, the user can have such a feeling as the finger hits an area on the display. Since the potential difference causes the second state in which the potential of the insensitive electrode is higher than that of the transparent electrode, during the continuing period of the touch, the electric current through the finger flows in the direction from the fingertip toward the outside, and thus similarly varies so as to follow the variation of the potential difference. When the electric current of this type is made to flow through the user's finger, the user can have such a feeling as the finger depresses an area on the display. In this manner, the display apparatus is able to continuously give the user the feeling of the finger's hitting the display and the feeling of the finger's depressing the display, whereby the user can have the operating feeling with reality.

In the display apparatus of the present invention, preferably, the potential of the transparent electrode is set higher at least once in a predetermined pulse width and at a predetermined frequency. Namely, it is also preferable to configure the display apparatus of the present invention so that the first state is caused at least once in the predetermined pulse width and at the predetermined frequency.

In the display apparatus of the present invention, preferably, the potential of the transparent electrode is set lower intermittently in a predetermined pulse width and at a predetermined frequency. Namely, it is also preferable to configure the display apparatus of the present invention so that the second state is intermittently caused in the predetermined pulse width and at the predetermined frequency.

The display apparatus of the present invention is also preferably configured to comprise touch pressure detecting means for, when the transparent electrode layer is given a touch, detecting a pressure of the touch, and configured so that when the transparent electrode layer is given the touch, the voltage applying means varies with time the potential of the transparent electrode in a region of the transparent electrode layer given the touch so as to intermittently cause the second state in which the potential of the insensitive electrode is higher than that of the transparent electrode in the predetermined pulse width and at the predetermined frequency during the continuing period of the touch and so that the frequency is varied as needed, based on the pressure of the touch detected by the touch pressure detecting means.

In the display apparatus of this preferred configuration, when the user's finger touches the transparent electrode layer to manipulate the touch panel display apparatus, the potential difference between the transparent electrode and the insensitive electrode is varied. If the insensitive electrode is mounted, for example, near the base of the user's finger, an electric current according to the potential variation flows through the user's finger because of the above potential difference. Since the above potential difference varies so that the second state of the potential difference in which the potential of the insensitive electrode is higher than that of the transparent electrode is intermittently caused in the predetermined pulse width and at the predetermined frequency during the continuing period of the touch, the electric current through the finger flows in the direction from the fingertip toward the outside and similarly varies so as to follow the variation of the potential difference. When the electric current of this type is made to flow through the user's finger, the user can have such a feeling as the finger depresses an area on the display. Since the frequency of the potential variation varies based on change of depressing force with the user's finger, the user can have such a feeling as the reaction force from the display varies according to the depressing force. In this manner, the display apparatus permits the user to have the operating feeling with reality.

In the display apparatus of the present invention, preferably, the voltage applying means further sets the potential of the transparent electrode higher than that of the insensitive electrode in a predetermined time before an end of the touch. Namely, it is also preferable to configure the display apparatus of the present invention so that the voltage applying means further causes the first state in which the potential of the transparent electrode is higher than that of the insensitive electrode, in the predetermined period before the end of the touch.

In the display apparatus of the present invention, preferably, the voltage applying means further causes the first state in which the potential of the transparent electrode is higher than that of the insensitive electrode, at least once in a predetermined pulse width and at a predetermined frequency, in a predetermined time before an end of the touch.

The display apparatus of this preferred configuration can give the user such a feeling as the user's finger is repelled from an operation button immediately before it leaves the transparent electrode layer, whereby the user can have the operating feeling with more reality.

In the display apparatus of the present invention, preferably, the voltage applying means varies with time the potential of a transparent electrode in a predetermined area, out of the transparent electrodes in the region of the transparent electrode layer given the touch, and the predetermined area is set corresponding to an image displayed on the display.

In the display apparatus of this preferred configuration, the aforementioned area where the electric current flows can be set corresponding to an image displayed on the display. Therefore, the user can be given the sense of touch corresponding to the displayed image, whereby the user can have the operating feeling with reality.

### BRIEF DESCRIPTION OF THE DRAWINGS

The present invention may be more readily described with reference to the accompanying drawings, in which:

Fig. 1 is a block diagram showing a system configuration of a touch panel display apparatus;

Fig. 2 is an illustration showing a cross section near a front surface of the touch panel display apparatus;

Fig. 3A is an illustration showing stimulation electrodes arrayed on a transparent conductive film;

Fig. 3B is an illustration showing stimulation electrodes arrayed on a transparent conductive film;

Fig. 4 is an illustration showing the concept of image data and application map data;

Fig. 5 is a flowchart of processing carried out by a control part;

Fig. 6A is an illustration showing a touch region and stimulation electrodes;

Fig. 6B is an illustration showing a touch region and stimulation electrodes; and

Fig. 7 is a graph showing touch pressure, and temporal change of electric current varying therewith.

### DESCRIPTION OF THE PREFERRED EMBODIMENTS

The knowledge of the present invention can be readily understood in view of the following detailed description with reference to the accompanying drawings presented for illustrative purposes only. Subsequently, the embodiments of the present invention will be described with reference to the accompanying drawings. The same portions will be denoted by the same reference symbols as much as possible, without redundant description.

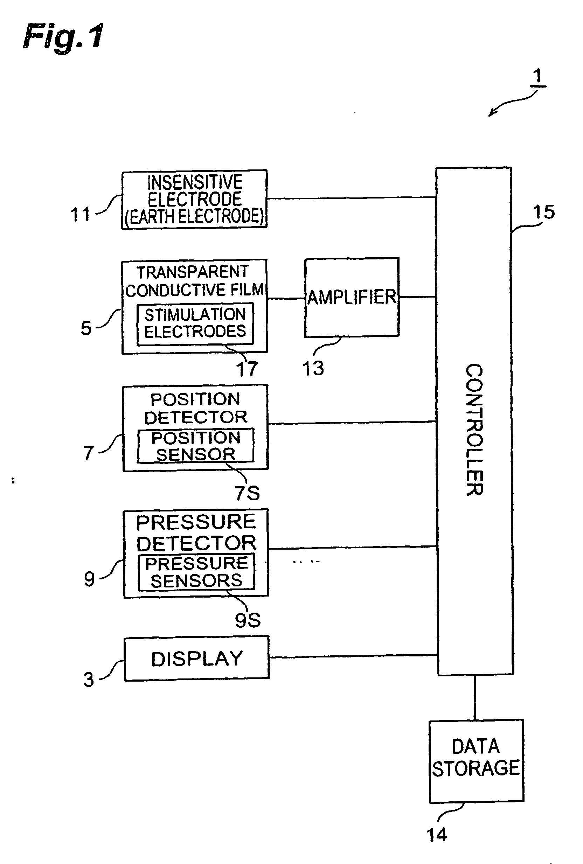

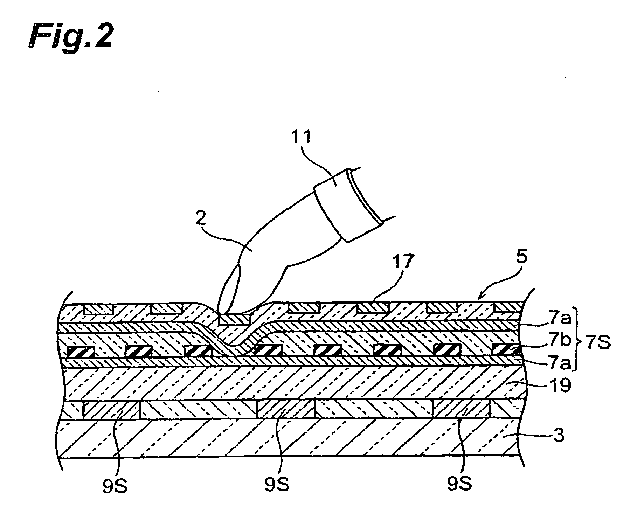

A touch panel display apparatus 1 (display apparatus) according to an embodiment will be described with reference to Figs. 1 and 2. Fig. 1 is a block diagram showing a system configuration of the touch panel display apparatus 1. The touch panel display apparatus 1 is comprised of a display 3, a transparent conductive film (transparent electrode layer) 5, a position detection part 7, a pressure detection part 9, an insensitive electrode 11, an amplification part 13, a data storage part 14, and a control part 15. Fig. 2 is an illustration showing a cross section near a front surface of the touch panel display apparatus 1. Here a surface facing a user of the touch panel display apparatus 1 will be referred to as a "front surface," and the opposite surface as a "back surface."

Each of the devices of display 3, transparent conductive film 5, position detection part 7, pressure detection part 9, insensitive electrode 11, amplification part 13, and data storage part 14 is connected to the control part 15, and the control part 15 exchanges electric signals with each of the devices. The control part 15 processes a received electric signal according to a predetermined program and feeds an electric signal to control the operation of these devices connected thereto. The data storage part 14 stores programs and others for the device control, and a necessary program is retrieved into the control part 15 as occasion demands.

The display 3 has a display screen for presenting to the user an image of information indicating an operating state of the touch panel display apparatus 1 or information for encouraging the user to input data. The display screen displays, for example, an image of push buttons accepting a user's depression operation or the like. At this time, the user brings a finger 2 into touch with a portion of the transparent conductive film 5 at a position corresponding to an image of a push button to be depressed, thereby performing an operation such as a depression on the desired push button. The display 3 is, for example, a CRT monitor, a liquid crystal monitor, or the like.

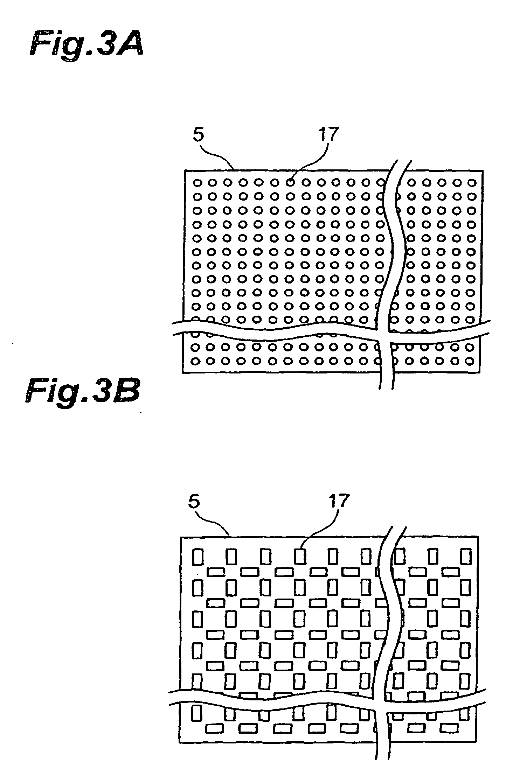

The transparent conductive film 5 is overlaid on the display 3 so as to cover an almost entire surface on the front surface side of the display screen of the display 3. As shown in Fig. 3A, stimulation electrodes (transparent electrodes) 17 are arrayed in a matrix over an almost entire surface on the front surface side of the transparent conductive film 5 (i.e., on the opposite side to the surface facing the screen of the display 3). The transparent conductive film 5 is provided on the outermost front surface side of the touch panel display apparatus 1 and the stimulation electrodes 17 are exposed on the outermost front surface side of the apparatus.

The stimulation electrodes 17 are formed on the transparent conductive film 5 by etching. A method of forming the stimulation electrodes 17 is not limited to the etching only, but it may also be evaporation, pasting, peeling, or the like. The array density of stimulation electrodes 17 is approximately 30/cm². Increase in the array density of stimulation electrodes 17 can present finer touch feelings, but will complicate production steps and others. If the size of stimulation electrodes 17 is too small, the impedance of touch with skin will become too high. From the viewpoints as described above, the array density and size of stimulation electrodes 17 are set to appropriate values.

When the user's finger 2 touches the transparent conductive film 5, the user's finger 2 comes to touch any one or some of the stimulation electrodes 17. When the user's finger 2 touches a certain portion in the surface of the transparent conductive film 5, electricity is fed through the finger 2 between the stimulant electrode 17 and the after-described insensitive electrode 11, so that an electric current flows through the user's finger 2 because of the potential difference between the stimulant electrode 17 and the insensitive electrode 11.

The transparent conductive film 5 and stimulation electrodes 17 both are virtually transparent, in order to permit the user to view an image displayed on the display 3, through the transparent conductive film 5. The shape and array configuration of stimulation electrodes 17 are not limited to Fig. 3A, but they may also be, for example, as shown in Fig. 3B. The shape or the like of stimulation electrodes 17 may be any shape such as a circle, a rectangle, a triangle, or the like.

The touch panel display apparatus 1 of the present embodiment employs a resistive film method being a well-known method, as a method in which when the user's finger 2 touches the transparent conductive film 5, the position detection part 7 detects which position range on the transparent conductive film 5 (hereinafter referred to as a "touch position") is a region of the touch (hereinafter referred to as a "touch region").

Normally, the user's finger 2 touches the transparent conductive film 5 across a touch surface having a certain touch area, and thus the touch panel display apparatus 1 recognizes a range of the position of the touch region. Therefore, the "touch region" means a portion having a certain area, and the "touch position" means a range having a certain area, as the range of the position of the touch region.

The position detection part 7 has a position sensor 7s. The position sensor 7s is provided in layers between the transparent conductive film 5 and the display screen of the display 3 and covers an almost entire surface of the display screen of the display 3. As shown in Fig. 2, the position sensor 7s is configured so that dot spacers 7b of an insulator are interposed between two layers of conductive films 7a. When the user's finger 2 touches the transparent conductive film 5, the conductive film 7a on the front surface side is deformed at the touch position to go into a touch and conduction state with the conductive film 7a on the back surface side. An electric signal according to the touch position can be generated by detecting which region partitioned by dot spacers 7b is the point of conduction.

When the user's finger 2 touches the transparent conductive film 5, the position sensor 7s transmits a touch position signal according to the touch position to the control part 15 described later. The control part 15 processes the touch position signal received, according to a program preliminarily stored in the data storage part 14 or the like to derive the touch position. The above processing by the position sensor 7s and the control part 15 constitutes the position detection part (touch position detecting means) 7 as a functional component.

The detection method of the touch position by the position detection part 7 may be any other method that can detect the touch position, without having to be limited to the resistive film method. For example, the position detection method by the position detection part 7 may be another well-known method such as an infrared method, an ultrasonic method, or a capacitance method.

The pressure detection part 9 has pressure sensors 9s. As shown in Fig. 2, the pressure sensors 9s are arrayed at predetermined intervals between a glass layer 19 provided on the back surface side of the position sensor 7s, and the display 3. When the user's finger 2 touches the transparent conductive film 5, a pressure sensor is subject to a compressive stress between the glass layer 19 and the display screen of the display 3 and sends a touch pressure signal according to a pressure of depression (hereinafter referred to as a "touch pressure") on the transparent conductive film 5 by the user's finger 2, to the control part 15 described later.

The control part 15 processes the received touch pressure signal according to a program preliminarily stored in the data storage part 14 or the like to derive the touch pressure. The above processing by the pressure sensor 9s and the control part 15 constitutes the pressure detection part (touch pressure detecting means) 9 as a functional component. The pressure sensors 9s are, for example, pressure sensors using the well-known piezoelectric elements, pressure-sensitive conductive rubber, or the like.

The insensitive electrode 11 is made of an electroconductive material, and is electrically isolated from the stimulation electrodes 17, and the insensitive electrode 11 is always maintained at the potential of 0 V. The insensitive electrode 11 is used while being mounted near the base of the finger 2 to manipulate the touch panel display apparatus 1 as shown in Fig. 2. In a state in which the insensitive electrode 11 is mounted near the base of the finger 2 of the user, when the tip of the user's finger 2 touches a stimulant electrode 17 on the transparent conductive film, an electric current flows between the two electrodes, i.e., between the user's fingertip and the vicinity of the base of the finger under a predetermined condition, whereby the user senses a stimulus at the finger due to the electric current.

The potential difference between the insensitive electrode 11 and stimulant electrode 17, and the electric current flowing between the two electrodes will be described. The insensitive electrode 11 is kept at the potential of 0 v, and the potential at the stimulant electrode 17 is varied to establish the potential difference between the insensitive electrode 11 and the stimulant electrode 17 (hereinafter referred to simply as "voltage application"). The touch panel display apparatus 1 is configured to execute two voltage application ways of turning the stimulant electrode 17 to a positive potential (hereinafter referred to as "positive application") and turning the stimulant electrode 17 to a negative potential (hereinafter referred to as "negative application").

The positive application can cause the aforementioned first state, whereas the negative application can cause the aforementioned second state. The voltage application can be independently implemented for each of the stimulation electrodes 17 arrayed on the transparent conductive film 5. Namely, the stimulation electrodes 17 can independently have different potentials. The potential of each stimulant electrode 17 can also be varied with time, and the potentials of the respective stimulation electrodes 17 can also be independently varied in different modes (e.g., different pulse widths and frequencies).

The potential difference between the insensitive electrode 11 and stimulant electrode 17 is at most approximately ±150 V, and the size of the touch surface of the insensitive electrode in touch with the surface of the finger 2 is approximately 5 cm². In this setting, an electric current of about ±2 mA per stimulant electrode 17 flows through the user's finger 2, whereby the user's finger 2 is given a stimulus in appropriate magnitude. Since the insensitive electrode 11 is constructed to be able to be mounted on the base of the finger of the user to manipulate the touch panel display apparatus 1, the distance can be short between the insensitive electrode 11 and the stimulant electrode 17. This can reduce variation in electric resistance between the two electrodes, whereby a stable electric current can be gained.

The data storage part 14 stores image data to be displayed in each operation stage on the display 3, and application map data indicating array settings of applied electrodes and non-applied electrodes in each operation stage. Here the "applied electrodes" refers to stimulation electrodes 17 to which a voltage is applied with a touch of the user's finger 2, and the "non-applied electrodes" to stimulation electrodes 17 to which no voltage is applied even with a touch of the user's finger 2. The applied electrodes and the non-applied electrodes both are in a state in which no voltage is applied, without touch of the user's finger 2. In the application map data every stimulant electrode 17 on the transparent conductive film 5 is set as either an applied electrode or a non-applied electrode.

The control part 15 retrieves the image data in each operation stage to display the image data in each operation stage on the display 3. The control part 15 also retrieves the application map data in each operation stage to recognize an array setting of applied electrodes and non-applied electrodes on the transparent conductive film 5.

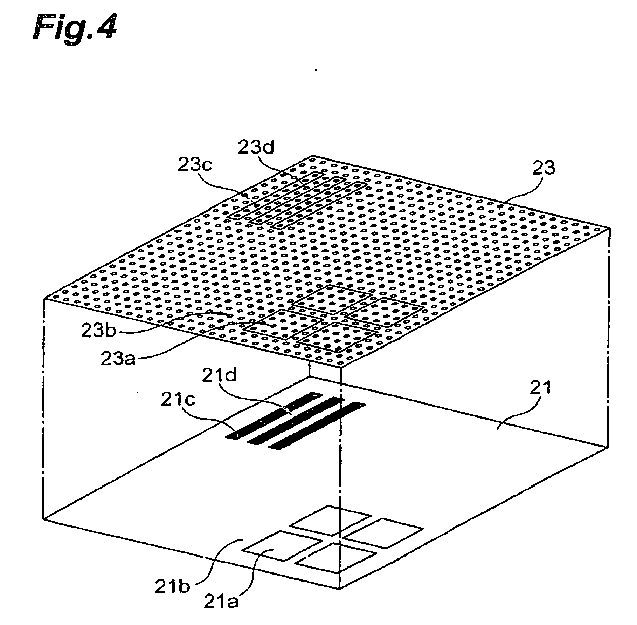

The image data 21 is data of images to be displayed on the display screen of the display 3. The application map data 23 is data of arrays of applied electrodes and non-applied electrodes on the transparent conductive film 5. Fig. 4 is an illustration showing the concept of the image data 21 and application map data 23 in a certain operation stage in the touch panel display apparatus 1. In the application map data 23 of Fig. 4, black dots represent applied electrodes, while white dots non-applied electrodes.

As shown in Fig. 4, the applied electrodes and non-applied electrodes in the application map data 23 are arrayed corresponding to positions and patterns of objects shown in the image data 21. For example, concerning a position range to display an operation button 21a in the image data 21, stimulation electrodes 17 at positions corresponding to the interior of this position range (within the predetermined range) (stimulation electrodes 23a) are set as applied electrodes on the application map data 23, while stimulation electrodes 17 at positions corresponding to the exterior 21b of this position range (stimulation electrodes 23b) are set as non-applied electrodes.

The stimulation electrodes 17 at positions corresponding to black portions 21c of stripe patterns in the image data 21 (stimulation electrodes 23c) are also set as applied electrodes, while the stimulation electrodes 17 at positions corresponding to white portions 21d (stimulation electrodes 23d) are set as non-applied electrodes. In this manner, the applied electrodes and non-applied electrodes are arrayed corresponding to the patterns of images displayed on the display 3.

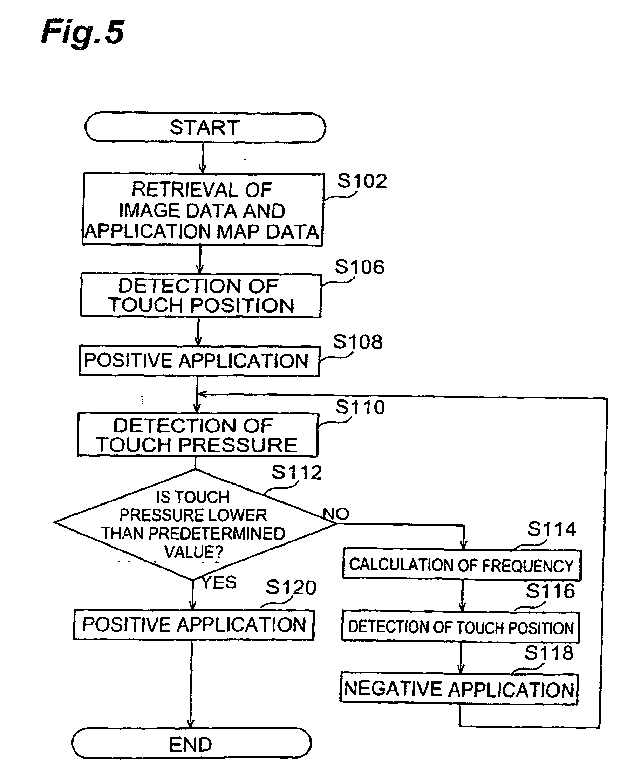

The processing carried out by the control part 15 will be described below with reference to Fig. 5. Fig. 5 is a flowchart of the processing carried out by the control part 15 and others when the user's finger 2 touches the transparent conductive film 5 in a certain operation stage of the touch panel display apparatus 1.

First, the control part retrieves the image data and application map data according to an operation stage of the touch panel display apparatus 1 (S102). An image is displayed in accordance with the retrieved image data on the display 3 and a touch on the transparent conductive film 5 is awaited.

When the user's finger 2 touches the transparent conductive film 5, the position sensor 7s sends a touch position signal according to the touch position to the control part 15, and the control part 15 detects the touch position on the basis of the touch position signal (S106).

Then the touch position is compared with the application map data, and the positive application is effected to only the stimulation electrodes 17 set as applied electrodes, out of the stimulation electrodes 17 in the touch region whereby an electric current flows through the user's finger 2 (S108). If the stimulation electrodes 17 set as applied electrodes are not included in the touch region, the processing can be directly terminated.

The touch panel display apparatus 1 is configured so that in the positive application at S108 a voltage of rectangular waveform with the pulse width of 500 µsec is applied by one pulse at the voltage of 150 V.

Then a pressure sensor 9s sends a touch pressure signal according to a touch pressure to the control part 15, and the control part 15 detects the touch pressure on the basis of the touch pressure signal (S110). The touch pressure is compared with a predetermined pressure (S112), and when the touch pressure is lower than the predetermined pressure, it is deemed that the user's finger 2 is off the transparent conductive film 5 or is about to leave it. The positive application is again carried out in the same manner as the application at S108 (S120), and the processing is terminated.

The predetermined pressure is set, for example, in the range of approximately 0.1 to 3.0 N/m². When the touch pressure is not lower than the predetermined pressure, the frequency for the voltage application is calculated. The frequency is calculated according to the detected touch pressure by a predetermined calculation method. In the predetermined calculation method the frequency is proportional to the touch pressure: the frequency increases with increase in the touch pressure, and the frequency decreases with decrease in the touch pressure (S114).

Subsequently, the touch position is again detected (S116). The detected touch position is compared with the application map data and the negative application is conducted to only the stimulation electrodes 17 set as applied electrodes, out of the stimulation electrodes 17 in the touch region, whereby an electric current flows through the user's finger 2 (S118). The negative application at this time is intermittently carried out at the frequency calculated at S114. In the negative application at S118, a voltage of rectangular waveform with the pulse width of 500 µsec is intermittently applied at the voltage of about -150 V and at the frequency of about 50-200 Hz. Since the process of S114 is carried out as needed during the touch period of the user's finger 2, the frequency varies according to the touch pressure on an as-needed basis.

Thereafter, the flow returns to S110 to repeat the processes from the detection of touch pressure. Since the touch pressure at S112 becomes not more than the predetermined pressure immediately before the user's finger 2 leaves the transparent conductive film, the positive application is again carried out in the same manner as the application at S108 (S120) and the processing is terminated.

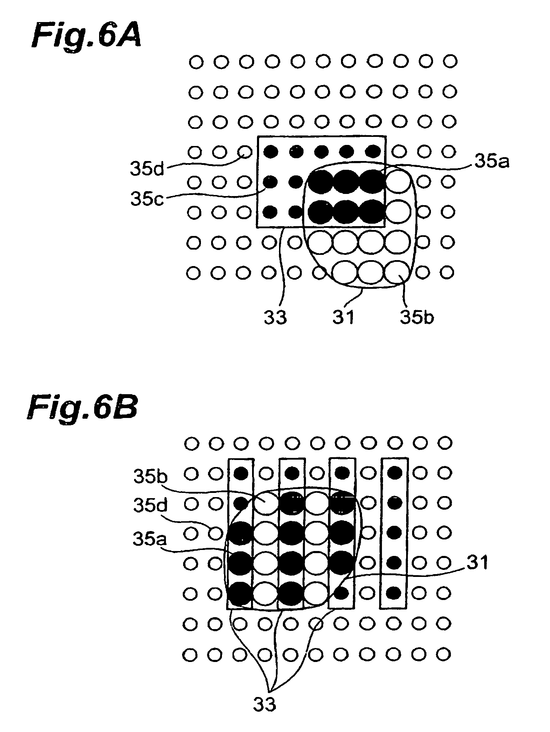

As described previously, the electrodes subjected to the positive application at S108 and subjected to the negative application at S118 are only the stimulation electrodes 17 set as applied electrodes, out of the stimulation electrodes 17 in the touch region. It will be specifically described with reference to Figs. 6A and 6B.

Fig. 6A is an illustration showing an example in which a touch region 31 partly laps over an area (predetermined area) 33 displaying an operation button, and Fig. 6B an illustration showing an example in which a touch region 31 laps over a position where stripe patterns are displayed.

The case of Fig. 6B is a state in which the touch region 31 partly laps over an area (predetermined area) 33 displaying black lines of stripe patterns. Big black dots represent applied electrodes 35a included in the touch region, while big white dots represent non-applied electrodes 35b included in the touch region. Small black dots represent applied electrodes 35c not included in the touch region, while small white dots represent non-applied electrodes 35d not included in the touch region. At S108 and at S118, the voltage is applied to only the electrodes included in the touch region and in the predetermined area 33 corresponding to the image (those set as applied electrodes), i.e., to only the stimulation electrodes 35a represented by the big black dots, and no voltage is applied to the other stimulation electrodes 35b, 35c, 35d.

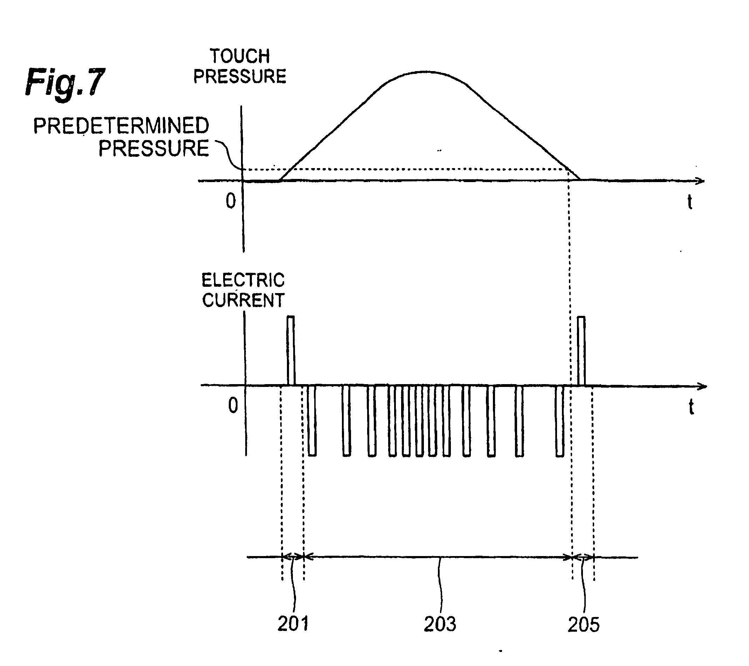

In consequence of the above, the temporal change of voltage application is as indicated by a waveform in Fig. 7. An upper graph in Fig. 7 indicates the temporal change of touch pressure, wherein the horizontal axis represents time and the vertical axis pressure. A lower graph indicates the temporal change of electric current corresponding to the touch pressure, wherein the horizontal axis represents time corresponding to that in the upper graph and the vertical axis electric current.

First, in a predetermined time immediately after a touch (the range of 201 in the figure), the positive application is carried out only once by a pulse of rectangular waveform having the pulse width of 500 µsec. Thereafter, during a continuing period of the touch (the range of 203 in the figure), the intermittent negative application is carried out by pulses of rectangular waveform having the pulse width of 500 µsec and the frequency of about 50-200 Hz. During this period, the pressure detection part 9 detects the touch pressure and the frequency is changed according to need in such a manner that the frequency is increased with increase in the touch pressure and that the frequency is decreased with decrease in the touch pressure.

Immediately before an end of the touch (in the range of 205 in the figure), the positive application is carried out only once by a pulse of rectangular waveform having the pulse width of 500 µsec. However, the positive application herein is carried out on the assumption that a time when the touch pressure detected by the pressure detection part 9 becomes lower than the predetermined pressure is the timing immediately before the end of the touch.

The action and effect of the touch panel display apparatus 1 described above will be described below. First, according to the mechanism of the human finger's having a touch feeling, when a man is subject to vibration at a fingertip, nerves extending in a direction perpendicular to skin are stimulated. When a man is subject to pressure at a fingertip, nerves extending in directions parallel to skin are stimulated.

Conversely, if nerves extending in the direction perpendicular to skin are stimulated at the fingertip, a man senses vibration at the fingertip. If nerves extending in the directions parallel to skin are stimulated, a man senses pressure at the fingertip. The nerves extending in the direction perpendicular to skin can be stimulated by allowing an electric current to flow in the direction from the outside toward the fingertip (hereinafter referred to as a "positive current"). The nerves extending in the directions parallel to skin can be stimulated by allowing an electric current to flow in the direction from the fingertip to the outside (hereinafter referred to as a "negative current").

In order for the user to have the above feelings by the positive current and by the negative current, it is effective to make an electric current intermittently flow by pulses of rectangular waveform having a predetermined pulse width and a predetermined frequency, particularly, the positive current and the negative current both are preferably intermittent electric currents with the pulse width of about 500 µsec, the frequency of about 50-200 Hz, and the ampere of about 2 mA.

When the negative current intermittently flows in the rectangular waveform, the pressure felt by a man becomes higher with increase in the frequency of the negative current, and the pressure felt by a man becomes lower with decrease in the frequency. In view of the mechanism described above, the action and effect of touch panel display apparatus 1 will be described.

In the touch panel display apparatus 1, when the user's finger 2 touches the transparent conductive film 5 to manipulate the touch panel display apparatus 1, the finger goes into touch with the stimulation electrodes 17 arrayed on the transparent conductive film 5. When the user's finger 2 touches a stimulant electrode set as an applied electrode among the stimulation electrodes 17, a voltage varying with time in a waveform as shown in the graph of Fig. 7 is applied between the stimulant electrode 17 and the insensitive electrode 11. This application of voltage results in letting an electric current of a waveform similar to the waveform of the voltage application, flow through the user's finger 2.

For example, let us consider a case in which the user's finger 2 manipulates an operation button displayed on the display 3. In order to manipulate a virtual operation button on the display 3, the user's finger 2 touches an area of the transparent conductive film 5 corresponding to a region displaying the operation button. The stimulation electrodes 17 in this area are set as applied electrodes corresponding to the operation button, and the user's finger 2 touches these stimulation electrodes 17.

First, immediately after the user's finger 2 touches the operation button (in the range of 201 in Fig. 7), the positive current flows through the finger 2, whereupon the user has a feeling of vibration. This gives the user such a feeling as the finger hits the operation button. Next, during a continuing period of the touch with the operation button (the range of 203 in Fig. 7), the negative current is intermittently allowed to flow at the frequency of about 50 to 200 Hz through the finger 2, whereby the user feels pressure. This causes the user to have such a feeling as the finger depresses the operation button and receives reaction force from the operation button.

When the pressure of the user's depression on the operation button is varied, the frequency of the electric current varies according to the variation of pressure, whereby the user has such a feeling as the reaction force from the operation button varies according to the depressing force of the finger.

Immediately before the user's finger 2 leaves the operation button (in the range of 205 in Fig. 7), the positive current flows through the finger 2, whereupon the user senses vibration. This causes the user to have such a feeling as the finger is repelled from the operation button at the moment when the finger leaves the operation button.

In this manner, the touch panel display apparatus 1 is configured so that when the user manipulates a virtual object displayed as a planar image on the display 3, the user can has such an operating feeling with reality as he or shi manipulates a real object.

In the touch panel display apparatus 1, when the user's finger 2 touches an electrode set as an applied electrode among the stimulation electrodes 17, the aforementioned voltage is applied thereto. On the other hand, when the user's finger 2 touches an electrode set as a non-applied electrode among the stimulation electrodes 17, no voltage is applied thereto.

The setting of the array of applied electrodes and non-applied electrodes is made corresponding to an image displayed on the display 3. For example, the setting is such that applied electrodes correspond to a region corresponding to an object displayed on the display 3 and non-applied electrodes correspond to the other region.

This setting permits the user to have such a touch feeling as there exists the object in the object-displaying region and no object in the other region by tactile sensation at the finger, whereby the user can have the operating feeling with reality. Since the position of the object can be presented to the user by tactile sensation, even a visually-impaired person or the like can manipulate it without difficulty.

The user's finger 2 often touches the transparent conductive film 5 in a touch region having a certain area, and at this time the user's finger 2 touches a plurality of stimulation electrodes 17 included in the touch region. In the touch panel display apparatus 1, since only the stimulation electrodes 17 in a range corresponding to an image of an object are set as applied electrodes out of the stimulation electrodes 17 in the touch region, only these stimulation electrodes 17 give the user the tactile sensation of touch with the object. For example, therefore, in a case where the touch region is a region across an edge of an object displayed on the display 3, as shown in Fig. 6A, the user can have such a touch feeling as the finger touches the edge of the object.

In the touch panel display apparatus 1, as shown in Fig. 6B, the setting of the array of applied electrodes and non-applied electrodes is made corresponding to fine patterns such as the stripe patterns. Therefore, when the user's finger 2 touches a portion corresponding to an image of fine patterns, the user can have such a touch feeling as the fine patterns are actually formed in uneven shape. If the setting of the array of applied electrodes and non-applied electrodes is changed according to a material of an object (e.g., wood or fabric) displayed on the display 3, the user can feel the material of the object by tactile sensation.

The present invention can be modified in various ways, without having to be limited to the above embodiments. For example, the touch panel display apparatus 1 was configured to perform the positive application by one pulse immediately after the user's finger 2 touched the transparent conductive film 5, but it is also possible to adopt a configuration wherein the time of the positive application is set to a predetermined period of time immediately after a touch, the number of pulses is set to be two or more, and the positive application is carried out by a plurality of pulses at a predetermined frequency. In the same manner, the number of pulses for the positive application immediately before the end of the touch can also be set to be two or more similarly. The predetermined period of time is preferably set at about 0.1 sec in view of giving the user a vibration feeling with reality.

The touch panel display apparatus 1 is configured to detect the touch pressure by the pressure detection part 9 and to vary the frequency of the voltage application according to the touch pressure, but it is noted that the pressure detection part 9 and the variation of frequency according to the touch pressure are not always indispensable in the present invention.

## Claims

1. A display apparatus (1) comprising: a display (3);
a transparent electrode layer (5) overlaid on a
screen of the display (3) and having a plurality of transparent electrodes (17) arranged in a two-dimensional array on the opposite side to a surface facing the screen; an insensitive electrode (11) for mounting at a user's finger electrically isolated from the transparent electrodes (17) and maintained at a constant potential; and
voltage applying means (13, 15) for varying a potential of the transparent electrodes (17) to establish a potential difference between each said transparent electrode (17) and the insensitive electrode (11);
wherein in response to a touch on the transparent electrode layer (5), the voltage applying means (13, 15) varies the potential of a transparent electrode (17) in a region of the transparent electrode layer (5) given the touch, with time.

2. The display apparatus (1) according to Claim 1, wherein when the transparent electrode layer (5) is given the touch, the voltage applying means (13, 15) varies with time the potential of a transparent electrode (17) in a region of the transparent electrode layer (5) given the touch so as to cause a first state (201) in which the potential of the transparent electrode (17) is higher than that of the insensitive electrode (11), in the predetermined time immediately after the touch and to cause a second state (203) in which the potential of the insensitive electrode (11) is higher than that of the transparent electrode (17), during a continuing period of the touch thereafter.

3. The display apparatus (1) according to Claim 2, wherein the potential of the transparent electrode (17) is set higher at least once in a predetermined pulse (201) width and at a predetermined frequency.

4. The display apparatus (1) according to Claim 2, wherein the potential of the transparent electrode (17) is set lower intermittently in a predetermined pulse width and at a predetermined frequency.

5. The display apparatus (1) according to Claim 1 comprising touch pressure detecting means (9) for, when the transparent electrode layer (5) is given a touch, detecting a pressure of the touch, wherein when the transparent electrode layer (5) is given the touch, the voltage applying means varies with time the potential of the transparent electrode (17) in a region of the transparent electrode layer given the touch so as to intermittently cause the second state (203) in which the potential of the insensitive electrode (11) is higher than that of the transparent electrode (17) in the predetermined pulse width and at the predetermined frequency during the continuing period of the touch and so that the frequency is varied as needed, based on the pressure of the touch detected by the touch pressure detecting means.

6. The display apparatus (1) according to Claim 1, wherein the voltage applying means (13, 15) further sets the potential of the transparent electrode (17) higher than that of the insensitive electrode (11) in a predetermined time before an end of the touch.

7. The display apparatus (1) according to Claim 1, wherein the voltage applying means (13, 15) varies with time the potential of a transparent electrode (17) in a predetermined area (35a), out of the transparent electrodes (17) in the region (31) of the transparent electrode layer (5) given the touch, and wherein the predetermined area (35a) is set corresponding to an image (33) displayed on the display.

## Patentansprüche

1. Anzeigevorrichtung (1) aufweisend:
eine Anzeigeeinrichtung (3);
eine transparente Elektrodenschicht (5), die einem Bildschirm der Anzeigeeinrichtung (3) überlagert ist und eine Mehrzahl von transparenten Elektroden (17) aufweist, die in einem zweidimensionalen Feld auf einer Seite angeordnet sind, die einer dem Bildschirm zugewandten Fläche entgegengesetzt ist;
eine nicht-erfassende Elektrode (11) zur Befestigung am Finger eines Benutzers, die gegen die transparenten Elektroden (17) elektrisch isoliert ist und auf konstantem Potenzial gehalten wird; und
eine Spannungsanlegeeinrichtung (13, 15), die ein Potenzial der transparenten Elektroden (17) variiert, um eine Potenzialdifferenz zwischen einer jeweiligen transparenten Elektrode (17) und der nicht-erfassenden Elektrode (11) herzustellen;
wobei, reagierend auf eine Berührung der transparenten Elektrodenschicht (5), die Spannungsanlegeeinrichtung (13, 15) das Potenzial einer transparenten Elektrode (17) in einem Gebiet der transparenten Elektrodenschicht (5), das berührt wurde, über die Zeit variiert.

2. Anzeigevorrichtung (1) nach Anspruch 1, bei der, wenn die transparente Elektrodenschicht (5) berührt wird, die Spannungsanlegeeinrichtung (13, 15) das Potenzial einer transparenten Elektrode (17) in einem Gebiet der transparenten Elektrodenschicht (5), das berührt wurde, variiert, derart dass ein erster Zustand (201) hervorgerufen wird, bei dem das Potenzial der transparenten Elektrode (17) höher ist als das Potenzial der nicht-erfassenden Elektrode (11), und zwar in dem vorbestimmten Zeitraum unmittelbar nach der Berührung, und ein zweiter Zustand (203) hervorgerufen wird, bei dem das Potenzial der nicht-erfassenden Elektrode (11) höher ist als das Potenzial der transparenten Elektrode (17), und zwar in einem sich daran anschließenden Zeitraum der Berührung.

3. Anzeigevorrichtung (1) nach Anspruch 2, bei der das Potenzial der transparenten Elektrode (17) auf einen höheren Wert eingestellt wird, und zwar zumindest einmal innerhalb einer vorbestimmten Impulsbreite (201) und mit vorbestimmter Frequenz.

4. Anzeigevorrichtung (1) nach Anspruch 2, bei der das Potenzial der transparenten Elektrode (17) auf einen niedrigeren Wert eingestellt wird, und zwar intermittierend innerhalb einer vorbestimmten Impulsbreite (201) und mit vorbestimmter Frequenz.

5. Anzeigevorrichtung (1) nach Anspruch 1, die eine Berührungsdruckerfassungseinrichtung (9) aufweist, welche, wenn die transparente. Elektrodenschicht (5) berührt wird, einen Berührungsdruck erfasst, wobei, wenn die transparente Elektrodenschicht (5) berührt wird, die Spannungsanlegeeinrichtung das Potenzial der transparenten Elektrode (17) in einem Gebiet der transparenten Elektrodenschicht, das berührt wurde, über die Zeit variiert, derart, dass der zweite Zustand (203) intermittierend hervorgerufen wird, bei dem das Potenzial der nicht-erfassenden Elektrode (11) höher ist als das Potenzial der transparenten Elektrode (17), und zwar innerhalb der vorbestimmten Impulsbreite und mit der vorbestimmten Frequenz während des andauernden Zeitraums der Berührung, und derart, dass die Frequenz wie erforderlich variiert wird, und zwar basierend auf dem Berührungsdruck, der durch die Berührungsdruckerfassungseinrichtung erfasst wurde.

6. Anzeigevorrichtung (1) nach Anspruch 1, bei der die Spannungsanlegeeinrichtung (13, 15) weiter das Potenzial der transparenten Elektrode (17) höher einstellt als das Potenzial der nicht-erfassenden Elektrode (11), und zwar innerhalb eines vorbestimmten Zeitraums vor einem Berührungsende.

7. Anzeigevorrichtung (1) nach Anspruch 1, bei der die Spannungsanlegeeinrichtung (13, 15) das Potenzial einer transparenten Elektrode (17) in einem vorbestimmten Gebiet (35a) von den transparenten Elektroden (17) in dem Gebiet (31) der transparenten Elektrodenschicht (5), das berührt wurde, variiert, wobei das vorbestimmte Gebiet (35a) entsprechend einem auf der Anzeigeeinrichtung angezeigten Bild (33) festgelegt ist.

## Revendications

1. Dispositif d'affichage (1) **caractérisé en ce qu'**il comprend : un affichage (3) ;
une couche d'électrode transparente (5) déposée sur un écran de l'affichage (3) et ayant une pluralité d'électrodes transparentes (17) disposées dans une matrice bidimensionnelle sur la face opposée à une surface faisant face à l'écran ; une électrode insensible (11) se montant sur le doigt d'un utilisateur, électriquement isolée des électrodes transparentes (17) et maintenue à un potentiel constant ; et
un moyen d'application de tension (13, 15) pour faire varier le potentiel des électrodes transparentes (17) afin d'établir une différence de potentiel entre chacune desdites électrodes transparentes (17) et l'électrode insensible (11) ;
dans lequel en réponse à un contact sur la couche d'électrode transparente (5), le moyen d'application de tension (13, 15) fait varier dans le temps le potentiel d'une électrode transparente (17) dans une région de la couche d'électrode transparente (5) qui a été touchée.

2. Dispositif d'affichage (1) selon la revendication 1, **caractérisé en ce que** quand on touche la couche d'électrode transparente (5), le moyen d'application de tension (13, 15) fait varier dans le temps le potentiel d'une électrode transparente (17) dans une région de la couche d'électrode transparente (5) qui a été touchée afin de provoquer un premier état (201) dans lequel le potentiel de l'électrode transparente (17) est plus élevé que celui de l'électrode insensible (11), dans le temps prédéterminé immédiatement après le contact, et de provoquer un deuxième état (203) dans lequel le potentiel de l'électrode insensible (11) est plus élevé que celui de l'électrode transparente (17), pendant une période ininterrompue du contact après cela.

3. Dispositif d'affichage (1) selon la revendication 2, **caractérisé en ce que** le potentiel de l'électrode transparente (17) est défini plus haut au moins une fois dans une largeur d'impulsion (201) prédéterminée et à une fréquence prédéterminée.

4. Dispositif d'affichage (1) selon la revendication 2, **caractérisé en ce que** le potentiel de l'électrode transparente (17) est défini plus bas par intermittence dans une largeur d'impulsion prédéterminée et à une fréquence prédéterminée.

5. Dispositif d'affichage (1) selon la revendication 1 **caractérisé en ce qu'**il comprend un moyen (9) de détecter la pression du contact pour détecter, quand on touche la couche d'électrode transparente (5), une pression du contact, dans lequel quand on touche la couche d'électrode transparente (5), le moyen d'application de tension fait varier dans le temps le potentiel de l'électrode transparente (17) dans une région de la couche d'électrode transparente qui a été touchée de manière à provoquer par intermittence le deuxième état (203) dans lequel le potentiel de l'électrode insensible (11) est plus élevé que celui de l'électrode transparente (17) dans la largeur d'impulsion prédéterminée et à la fréquence prédéterminée pendant la période ininterrompue du contact et de manière à faire varier la fréquence comme nécessaire, sur la base de la pression du contact détectée par le moyen de détection de la pression de contact.

6. Dispositif d'affichage (1) selon la revendication 1, **caractérisé en ce que** le moyen d'application de la tension (13, 15) définit en outre le potentiel de l'électrode transparente (17) plus élevé que celui de l'électrode insensible (11) dans un temps prédéterminé avant une fin du contact.

7. Dispositif d'affichage (1) selon la revendication 1, **caractérisé en ce que** le moyen d'application de tension (13, 15) fait varier dans le temps le potentiel d'une électrode transparente (17) dans une zone prédéterminée (35a), hors des électrodes transparentes (17) dans la région (31) de la couche d'électrode transparente (5) qui a été touchée, et dans lequel la zone prédéterminée (35a) est définie correspondant à une image (33) affichée sur l'écran.
